# EUROPEAN PATENT SPECIFICATION

(11) **EP 3 587 945 B1**
(45) Date of publication and mention of the grant of the patent: **24.03.2021**
(21) Application number: 17897952.2
(22) Date of filing: 22.02.2017
(51) Int. Cl.: F24F 11/30, F24F 1/0007, F24F 1/0011, F24F 11/77, F24F 11/62, F24F 11/64, F24F 11/79, F24F 120/12, F24F 120/14, F24F 13/10

(54) **AIR CONDITIONING DEVICE**
KLIMATISIERUNGSVORRICHTUNG
DISPOSITIF DE CLIMATISATION

(43) Date of publication of application: 01.01.2020
(73) Proprietor: Mitsubishi Electric Corporation, Chiyoda-ku Tokyo 100-8310 (JP)
(72) Inventor: ORITO, Mari, Tokyo 100-8310 (JP); FURUHASHI, Takuya, Tokyo 100-8310 (JP); PARK, Shinyoung, Tokyo 100-8310 (JP); KIDO, Emiko, Tokyo 100-8310 (JP); OTA, Yoshihiro, Tokyo 100-8310 (JP); TAMURA, Natsumi, Tokyo 100-8310 (JP)
(74) Representative: Pfenning, Meinig & Partner mbB
(86) International application number: PCT/JP2017/006613
(87) International publication number: WO 2018/154660

(56) References cited:
- EP-A2- 2 960 588
- WO-A1-2010/125615
- WO-A1-2014/136286
- WO-A1-2015/122201
- JP-A- H0 532 119
- JP-A- H04 320 748
- JP-A- H06 323 599
- JP-A- 2006 220 405
- JP-A- 2011 064 427
- JP-A- 2012 211 722
- JP-A- 2015 052 435
- JP-A- 2015 066 329
- JP-A- 2016 044 859
- JP-A- 2016 217 583

## Description

### [Technical Field]

The present invention relates to an air conditioning device.

### [Background Art]

An air conditioning device is known in which a spacing between a lower blade and an upper blade of up-and-down wind direction changing blades is adjusted on the basis of a detection signal of a human sensor unit constituted by an infrared radiation sensor detecting the presence or absence of a person by detecting infrared radiation emitted from a human body, so as to distribute the air blown out from an outlet port of an indoor unit toward an upper space and a lower space, to adjust the air volume of the air to be distributed, and to control the temperature difference between the upper space and the lower space in the room, which is to be air-conditioned, to a desired value (for example, refer to PTL 1).

### [Citation List]

### [Patent Literature]

[PTL 1] Japanese Patent Application Publication No. 2014-031895
[PTL 2] Japanese Patent Application Publication JP-A-2006-220405

### [Summary of Invention]

### [Technical Problem]

Thus, in the air conditioning device such as shown in PTL 1, by changing the spacing between the lower blade and the upper blade of the up-and-down wind direction changing blades, the air volume sent to the upper space and lower space is changed to form a temperature difference between the upper space and the lower space. However, it is difficult to form a large temperature difference only by changing the volume of blown air. When forming the necessary temperature difference between the upper space and the lower space, one or both of thermal comfort and airflow comfort may be sacrificed.

An exemplary air conditioning device according to the preamble of claim 1 is known from PTL 2.

The present invention has been accomplished to solve such problems. An object of the present invention is to obtain an air conditioning device that can efficiently form a temperature distribution with a temperature difference in the vertical direction with a simple configuration and can support improvement in work efficiency of a person while maintaining thermal comfort and airflow comfort of the person.

### [Solution to Problem]

An air conditioning device according to the present invention includes: the combination of technical features of claim 1.

### [Advantageous Effects of Invention]

Advantageous effects demonstrated in the air conditioning device according to the present invention are that a temperature distribution with a temperature difference in the vertical direction can be efficiently formed with a simple configuration and an improvement in work efficiency of a person can be supported while maintaining thermal comfort and airflow comfort of the person.

### [Brief Description of the Drawings]

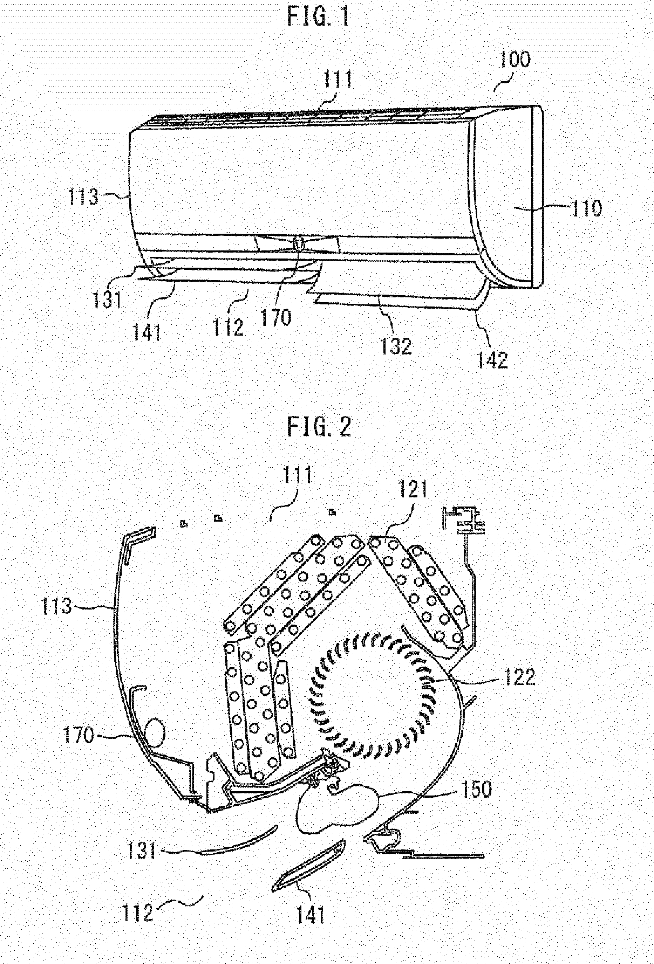

Fig. 1 is a front view of a refrigerator included in a refrigerator system according to an Embodiment 1 of the present invention.
Fig. 1 is an external perspective view of an air conditioning device according to an Embodiment 1 of the present invention.
Fig. 2 is a longitudinal sectional view of the air conditioning device according to an Embodiment 1 of the present invention.
Fig. 3 illustrates a detection range of a human body sensor provided to the air conditioning device according to an Embodiment 1 of the present invention.
Fig. 4 is a block diagram showing a configuration of a control system of the air conditioning device according to an Embodiment 1 of the present invention.
Fig. 5 is a block diagram showing a functional configuration of a control device of the air conditioning device according to an Embodiment 1 of the present invention.
Fig. 6 is a schematic diagram for explaining an example of a relationship between an air flow from the air conditioning device according to an Embodiment 1 of the present invention and a person.
Fig. 7 is a flow chart showing the flow of operation of the air conditioning device according to an Embodiment 1 of the present invention.
Fig. 8 shows an example of operation mode and temperature setting of the air conditioning device according to an Embodiment 1 of the present invention.
Fig. 9 is a schematic diagram for explaining another example of the relationship between the air flow from the air conditioning device according to an Embodiment 1 of the present invention and the person.

### [Description of Embodiment]

An embodiment of the present invention will be described with reference to the accompanying drawings. In each figure, the same or corresponding parts are denoted by the same reference numerals, and redundant explanations are simplified or omitted as appropriate. It should be noted that the present invention is not limited to the following embodiment, and various modifications can be made without departing from the scope of the present invention as disclosed by the appended claims.

### Embodiment 1

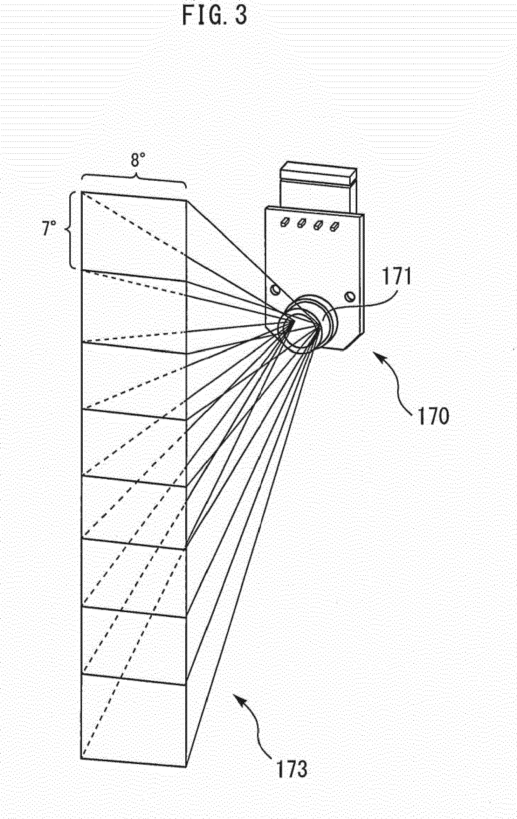

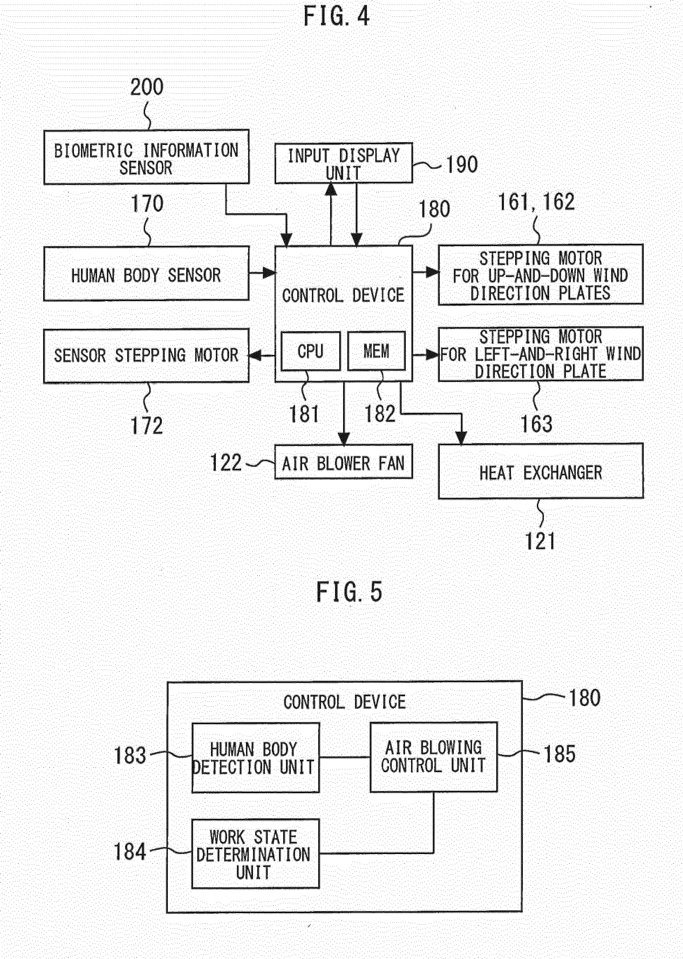

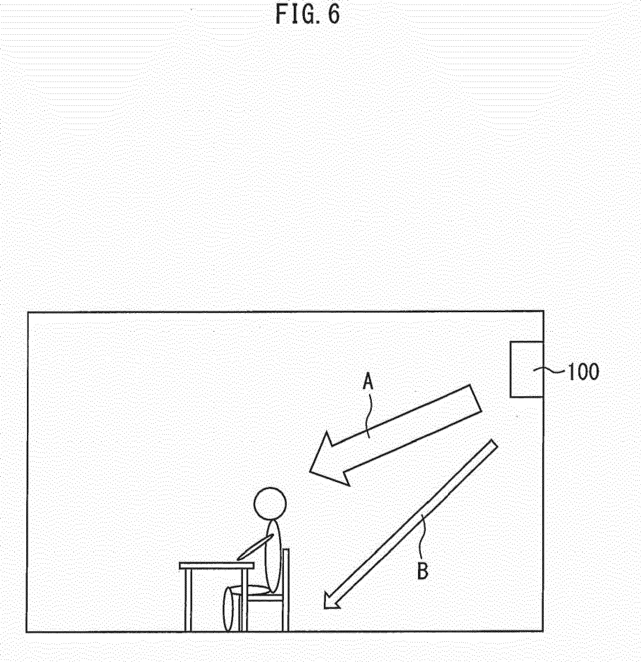

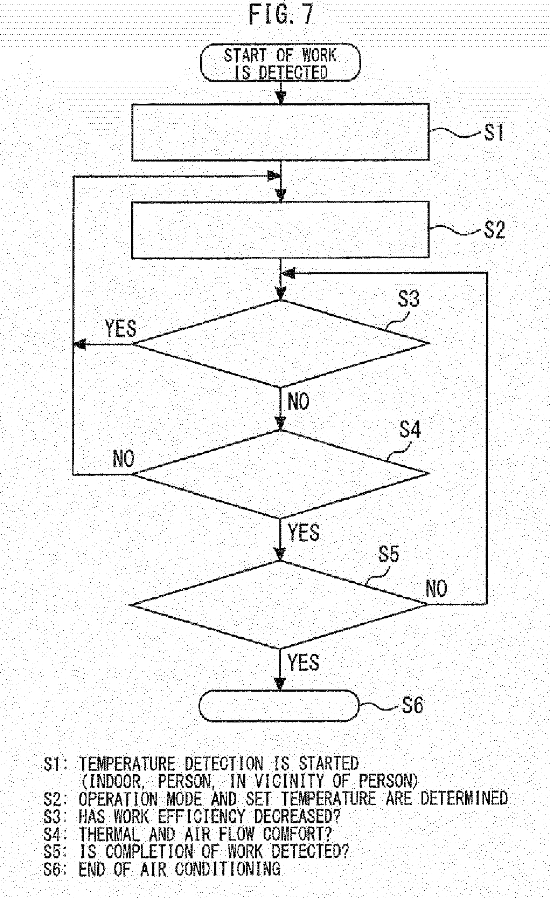

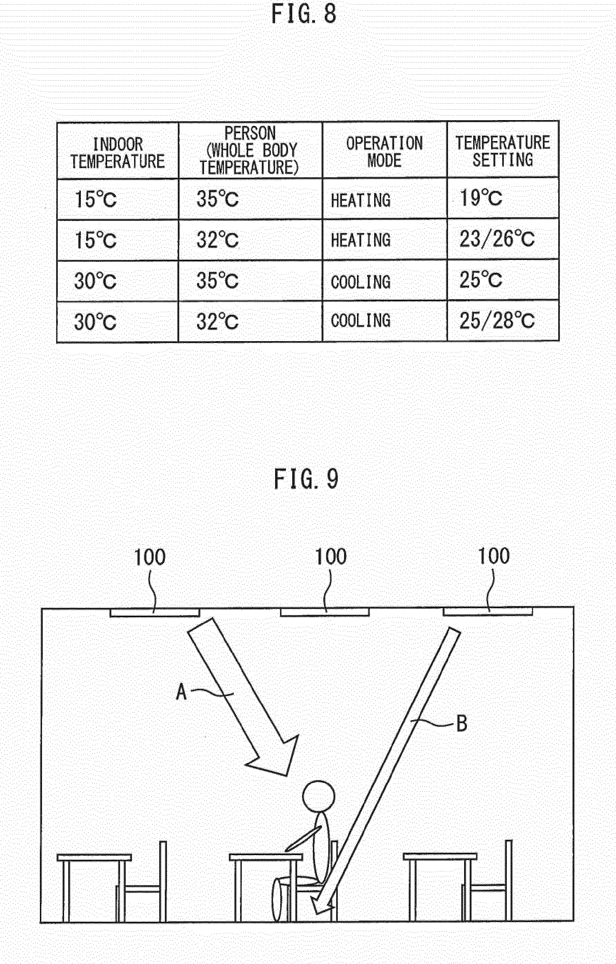

Figs. 1 to 9 relate to Embodiment 1 of the present invention, Fig. 1 is an external perspective view of an air conditioning device, Fig. 2 is a longitudinal sectional view of the air conditioning device, Fig. 3 illustrates a detection range of a human body sensor provided to the air conditioning device, Fig. 4 is a block diagram showing a configuration of a control system of the air conditioning device, Fig. 5 is a block diagram showing a functional configuration of a control device of the air conditioning device, Fig. 6 is a schematic diagram for explaining an example of a relationship between an air flow from the air conditioning device and a person, Fig. 7 is a flow chart showing the flow of operation of the air conditioning device, Fig. 8 shows an example of operation mode and temperature setting of the air conditioning device, and Fig. 9 is a schematic diagram for explaining another example of the relationship between the air flow from the air conditioning device and the person.

An air conditioning device 100 in Embodiment 1 of the present invention is, for example, an indoor unit of an air conditioner. Therefore, the air conditioning device 100 is installed on a wall surface or a ceiling surface of a room. Here, it is assumed that the air conditioning device 100 is installed on the wall surface of the room.

As shown in Figs. 1 and 2, the air conditioning device 100 includes a housing 110. The housing 110 of the air conditioning device 100 is formed in a substantially rectangular parallelepiped shape which is horizontally long and has a smooth curved surface from a front surface to a lower surface. An inlet port 111 is formed in the upper surface portion of the housing 110. The inlet port 111 is an opening for taking in air from the outside into the inside of the housing 110. An outlet port 112 is formed in the lower part of the front surface of the housing 110. The outlet port 112 is an opening for discharging air from the inside of the housing 110 to the outside. The upper portion of the front surface of the housing 110 is covered with a front panel 113.

Up-and-down wind direction plates 131, 132, 141, and 142 are provided at the outlet port 112. These up-and-down wind direction plates are for adjusting the blowing angle in the vertical direction of the air blown out from the outlet port 112.

The up-and-down wind direction plates are disposed on the front side and the back side toward the front surface of the air conditioning device 100. Further, the up-and-down wind direction plates on the front side and the back side are divided into right and left plates, respectively. That is, the up-and-down wind direction plate on the front side is divided into a left front up-and-down wind direction plate 131 on the left side and a right front up-and-down wind direction plate 132 on the right side toward the front surface of the air conditioning device 100. In addition, the up-and-down wind direction plate on the back side is divided into a left back up-and-down wind direction plate 141 on the left side and a right back up-and-down wind direction plate 142 on the right side toward the front surface of the air conditioning device 100.

The position where each of the up-and-down wind direction plates is divided into the right and left plates is substantially the center in the longitudinal direction (left-and-right direction of the outlet port 112) toward the front surface of the air conditioning device 100. A slight gap is formed between the left front up-and-down wind direction plate 131 and the right front front-side wind direction plate 132. Similarly, a slight gap is also formed between the left back up-and-down wind direction plate 141 and the right back up-and-down wind direction plate 142.

The left front up-and-down wind direction plate 131, the right front up-and-down wind direction plate 132, the left back up-and-down wind direction plate 141, and the right back up-and-down wind direction plate 142 are long narrow plate-shaped members extending in the lateral direction of the outlet port 112. In addition, the up-and-down wind direction plates 131, 132, 141, and 142 are each curved so that the cross section perpendicular to the longitudinal direction has a circular arc shape.

The up-and-down wind direction plates 131, 132, 141, and 142 are each attached to the housing 110 via a support arm (not shown). Each support arm is rotatably attached to the housing 110. By rotating each support arm with respect to the housing 110, it is possible to change the orientation of each up-and-down wind direction plate. By changing the orientation of the up-and-down wind direction plate, it is possible to change the air blowing direction upward and downward in the air conditioning device 100.

The support arm of each of the up-and-down wind direction plates is provided so that the angle thereof can be adjusted by driving a stepping motor for the up-and-down wind direction plate. Specifically, in this case, the orientation of the left front up-and-down wind direction plate 131 and the left back up-and-down wind direction plate 141 is changed by a stepping motor 161 for left up-and-down wind direction plates. The orientation of the right front up-and-down wind direction plate 132 and the right back up-and-down wind direction plate 142 is changed by a stepping motor 162 for the right up-and-down wind direction plates.

In this way, the blowing angle (air blowing direction) in the vertical direction of the air blown out from the left side of the outlet port 112 and the blowing angle (air blowing direction) in the vertical direction of the air blown out from the right side of the outlet port 112 can be separately adjusted. The stepping motor 161 for the left up-and-down wind direction plates and the stepping motor 162 for the right up-and-down wind direction plates are not shown in Figs. 1 and 2.

A left-and-right wind direction plate 150 is provided on the back side of the up-and-down wind direction plates 131, 132, 141, and 142 in the outlet port 112. The left-and-right wind direction plate 150 is for adjusting the blowing angle in the lateral direction of the air blown out from the outlet port 112. The left-and-right wind direction plate 150 is configured of a plurality of plate members arranged side by side along the longitudinal direction (lateral direction of the outlet port 112) toward the front surface of the air conditioning device 100. Like the up-and-down wind direction plates 131, 132, 141, and 142, the left-and-right wind direction plate 150 is attached so that the angle thereof can be adjusted by driving a stepping motor 163 (not shown in Figs. 1 and 2) for the left-and-right wind direction plate.

An air passage communicating from the inlet port 111 to the outlet port 112 is formed inside the housing 110. A heat exchanger 121 is installed on the leeward side of the inlet port 111 in the air passage. The heat exchanger 121 exchanges heat with the air flowing through the air passage to heat or cool the air flowing through the air passage. Whether the air is heated or cooled depends on whether the air conditioning device 100 is in a heating operation or a cooling operation. Specifically, during the heating operation, the heat exchanger 121 heats the air. Meanwhile, during the cooling operation, the heat exchanger 121 cools the air.

The heat exchanger 121 adjusts the temperature, humidity, and the like of the air by heating or cooling the air flowing through the air passage to generate conditioned air. In this way, the heat exchanger 121 exchanges heat with the air taken in from the inlet port 111 to generate conditioned air. During the heating operation, warm air is generated as the conditioned air, and during the cooling operation, cool air is generated as the conditioned air.

On the leeward side of the heat exchanger 121 in the wind path, an air blower fan 122 is installed. The air blower fan 122 is for generating an air flow directed from the inlet port 111 to the outlet port 112 in the air passage.

When the air blower fan 122 operates, an air flow directed from the inlet port 111 to the outlet port 112 is generated in the air passage, air is taken in from the inlet port 111, and air is blown out from the outlet port 112. The air taken in from the inlet port 111 becomes an air flow that passes through the air passage inside the air conditioning device 100 in the order of the heat exchanger 121 and the air blower fan 122 and is blown out from the outlet port 112. At this time, the direction (air blowing direction) of the wind blown out from the outlet port 112 is adjusted (changed) by the up-and-down wind direction plates 131, 132, 141, and 142 and the left-and-right wind direction plate 150 arranged on the leeward side of the air blower fan 122.

The air blower fan 122, the up-and-down wind direction plates 131, 132, 141, and 142, the left-and-right wind direction plate 150, the stepping motors 161 and 162 for the up-and-down wind direction plates, and the stepping motor 163 for the left-and-right wind direction plate constitute an air blowing mechanism provided in the housing 110. The air blowing mechanism configured as described above generates an air flow by taking in air from the inlet port 111 and blowing the conditioned air from the outlet port 112, and can change the wind direction of the conditioned air blown out from the outlet port 112.

In addition, the air blowing mechanism and the heat exchanger 121 constitute a conditioned air blowing unit. The conditioned air blowing unit configured as described above blows the conditioned air into the room in which the air conditioning device 100 is installed.

A human body sensor 170 is attached to the center of the front surface of the air conditioning device 100. However, the attachment position of the human body sensor 170 is not limited to the center of the front surface of the air conditioning device 100. For example, the human body sensor 170 may be attached to the end portion on the left or right side of the housing 110 or the like.

The human body sensor 170 includes, for example, a plurality of infrared radiation sensors (light receiving elements) arranged side by side in the vertical direction. Here, it is assumed that the human body sensor 170 includes, for example, eight infrared radiation sensors (light receiving elements). Each of these eight infrared radiation sensors is a detection element capable of individually performing infrared radiation reception and temperature detection. As shown in Fig. 3, for example, these infrared radiation sensors (light receiving elements) are arranged linearly side by side in the vertical direction inside a cylindrical metal can 171. As a result, the human body sensor 170 has a function of detecting the indoor temperature by dividing the room into eight areas having mutually different heights.

As shown in Fig. 3, the detection ranges of these eight infrared radiation sensors are set as quadrangular areas having the same size. As for the light distribution viewing angles of one infrared radiation sensor, for example, the vertical light distribution viewing angle in the vertical direction is set to 7° and the lateral light distribution viewing angle in the lateral direction is set to 8°.

A light distribution viewing angle 173 of the entire human body sensor 170 in which the light distribution viewing angles of the infrared radiation sensors are combined is set as a long narrow area in the vertical direction. The light distribution viewing angles (detection ranges) of the respective infrared radiation sensors need not have the same shape and the same size. Also, specific values of the vertical light distribution viewing angle and the lateral light distribution viewing angle are not limited to the above examples. Furthermore, the number of the infrared radiation sensors (light receiving elements) is not limited to eight, and the human body sensor 170 may be provided with any number of infrared radiation sensors (light receiving elements) which is 7 or less or 9 or more.

Further, the human body sensor 170 can change the orientation of the plurality of infrared radiation sensors, which are arranged side by side in the vertical direction, by a sensor stepping motor 172 (not shown in Figs. 1 and 2) to the left and right within a preset angle range. By doing so, each of the plurality of infrared radiation sensors arranged side by side in the vertical direction is caused to scan in the lateral direction, and the surface temperature can be detected within a preset detection range (hereinafter referred to as "temperature detection target range") in front of the air conditioning device 100.

Because of such a configuration, the human body sensor 170 scans the inside of the temperature detection target range and acquires the surface temperature distribution (thermal image) within the range in a contactless manner. By processing the detection result of the human body sensor 170, that is, the surface temperature distribution (thermal image) data acquired by the human body sensor 170, with the control device 180 or the like described hereinbelow, it is possible to detect the presence or absence and position of a heat source including a person in the room, the surface temperature of the human body, and parts of the human body (exposed and unexposed parts of the skin, head, and the like), and the like, for example, from the temperature difference with the background.

Also, based on the detection result of the human body sensor 170, it is possible to obtain the sensible temperature of the person in the room. In this case, it is easier to detect the sensible temperature for the human body with exposed skin. As the number of pixels of the light receiving element used for the human body sensor 170 increases, the detection accuracy of the human body sensor 170 increases. Specifically, for example, by using a light receiving element having a pixel number of 30 pixels or more, it is possible to accurately detect the position of the person in the room and the distance from the human body sensor 170 to the person.

The human body sensor 170 detects the temperature of the temperature detection target while scanning the temperature detection target range to the left and right. The left and right here are the left and right as viewed from the air conditioning device 100 side. When thermal image data (temperature distribution data) of a wall and a floor in a room are acquired, for example, the orientation of the human body sensor 170 is moved in the lateral direction by the sensor stepping motor 172, and the rotation of the sensor stepping motor 172 (that is the rotation of the orientation of the human body sensor 170) is stopped for a predetermined time at each fixed angle. The fixed angle at this time is, for example, 1° to 5°. Further, the predetermined time in this case is, for example, 0.1 sec to 0.2 sec. Then, after stopping the change of the orientation of the human body sensor 170, the detection results (thermal image data) of the eight light receiving elements of the human body sensor 170 are taken upon waiting for a time shorter than the above-mentioned predetermined time (0.1 sec to 0.2 sec).

After the taking of the detection result obtained by the human body sensor 170 is completed, the sensor stepping motor 172 is again rotated by the fixed angle and stopped again, and the detection result (thermal image data) of the human body sensor 170 is taken by the same operation. By repeating this operation, the detection results of the human body sensor 170 are acquired at, for example, 90 to 100 positions in the lateral direction within the detection range. Then, thermal image data (temperature distribution data) in the temperature detection target range can be obtained from the acquired detection results of the human body sensor 170.

The detection range of the human body sensor 170 is divided into a plurality of regions equal in number (here, 8) to the infrared radiation sensors (light receiving elements) in the depth direction. That is, the space in the room is divided into eight regions corresponding to the light distribution viewing angle of each light receiving element in the depth direction. The width of each divided region is set according to the spread of the light distribution viewing angle in the vertical direction.

The lowermost light receiving element of the human body sensor 170 detects a human body in a region on the front side closest to the air conditioning device 100. The upper light receiving elements of the human body sensor 170 are configured to detect a human body in more distant regions.

The detection range of the human body sensor 170 in the lateral direction may be configured, for example, so that the human body sensor 170 can be completely rotated by the sensor stepping motor 172, and the detection range may be set to 360°. Further, the human body sensor 170 may be swung in the vertical direction by another stepping motor or the like. By making it possible to change the orientation of the human body sensor 170 also in the vertical direction, it is possible to acquire detailed thermal image data not only in the horizontal direction but also in the vertical direction.

The human body sensor 170 may be configured to use an infrared radiation sensor in combination with another detection device. As a specific example, a configuration may be used in which a position, a shape, and a distance to a human body are detected using a camera, an ultrasonic sensor or the like. That is, in addition to the infrared radiation sensor, the human body sensor 170 may further include, for example, an ultrasonic sensor capable of detecting a physical object. By doing so, it is possible to improve the detection accuracy of the position of the human body and distance thereto by the human body sensor 170. In alternative configuration, a pyroelectric sensor using a Fresnel lens may be used to detect the position of the human body in the lateral direction of the room and the depth direction (front-back direction) as viewed from the air conditioning device 100.

Next, the configuration of the control system of the air conditioning device 100 will be described with reference to Fig. 4. The air conditioning device 100 includes a control device 180, an input display unit 190, and a biometric information sensor 200. The control device 180 is constituted by, for example, an electric circuit including a microcomputer or the like. When the control device 180 includes a microcomputer, the control device 180 includes a processor 181 and a memory 182. A program for control is stored in the memory 182. The processor 181 reads out and executes the program stored in the memory 182.

As the processor 181 executes the control program, the control device 180 executes preset processing and controls the operation of the air conditioning device 100. Further, in particular, as a result of the processor 181 executing the program stored in the memory 182, functions of units such as the below-described human body detection unit 183, work state determination unit 184, and air blowing control unit 185 are realized.

The sensor system including the human body sensor 170, the biometric information sensor 200, and the like are connected to the input side of the control device 180. Various actuators including the air blower fan 122, the stepping motor 161 for the left up-and-down wind direction plates, the stepping motor 162 for the right up-and-down wind direction plates, the stepping motor 163 for the left-and-right wind direction plate, and the sensor stepping motor 172 are connected to the output side of the control device 180.

The input display unit 190 is for allowing the user to input various set values and for displaying various kinds of information to the user. The input display unit 190 is, for example, a remote controller or the like. The input display unit 190 is communicatively connected to the control device 180. By operating the input display unit 190, the user can turn ON/OFF the power supply, switch between heating operation and cooling operation, set the temperature, wind direction, air volume, and the like. Further, the input display unit 190 includes, for example, a liquid crystal display for displaying various kinds of information. For example, the setting contents such as the operation mode, temperature, wind direction, air volume, and the like are displayed on the liquid crystal display of the input display unit.

The biometric information sensor 200 is biometric information acquisition means for acquiring biometric information of a person. Specific examples of the biometric information of a person acquired by the biometric information sensor 200 include human breathing, brain waves, heart rhythm, balance feature of sympathetic nerves and parasympathetic nerves, viewpoint distance, pupil diameter, number of blinks and the like. The biometric information sensor 200 does not need to be provided in the air conditioning device 100 itself. A configuration including an external device as the biometric information sensor 200 may be also used.

The control device 180 drives each actuator on the basis of the input from the sensor system and the input display unit 190 to control the operation of the air conditioning device 100. The control executed by the control device 180 includes, for example, control of cooling operation, heating operation, blowing operation, scanning operation of the human body sensor 170, and the like. That is, for example, the control device 180 controls the air blowing mechanism according to the detection result of the human body sensor 170 and the detection result of the biometric information sensor 200.

As shown in Fig. 5, the control device 180 includes the human body detection unit 183, the work state determination unit 184, and the air blowing control unit 185. The human body detection unit 183 detects a human body present within the temperature detection target range of the human body sensor 170 on the basis of the detection result of the human body sensor 170. Detection of a human body can be performed by using, for example, the shape, distribution (relative positional relationship), surface area, and the like of each region in which the surface temperature detected by the human body sensor 170 is equal to or higher than a preset reference temperature. The reference temperature at this time is specifically set to, for example, 30°C or the like in consideration of the human body temperature. In this way, the human body sensor 170 and the human body detection unit 183 constitute person detection means for detecting a person within the preset detection range.

In addition, the person detection means can detect not only a person but also each part of the detected person. In particular, the person detection means can specify at least an upper part and a lower part of the detected person. The upper part of a person is a portion of the upper body including the vicinity of the person's face. The lower part of a person is a portion of the lower body including the vicinity of the person's feet. When the person detection means specifies the upper part and the lower part of a person, a part of the human body may be specified from the shape of the entire human body after specifying the shape of the entire human body, or a part of the human body may be specified directly.

When specifying the shape of the entire human body, first, the region where the human body is present is specified. The region where the human body is present can be specified by using, for example, the shape, distribution (relative positional relationship) and area of each region where the surface temperature is equal to or higher than a certain temperature, the relative magnitude relationship between the temperatures in the regions, and the like.

Further, when specifying the shape of the entire human body, the entire area where the human body is present may be specified at once, or the area where the human body is present may be individually specified for each part of the human body. In the case of individually specifying the region present for each part of the human body, for example, a region where each part is present is respectively specified for each part such as the head, chest, arm, upper leg portion, lower leg portion, hand, and foot of the human body. The term "hand" as used herein refers to the portion on the distal end side with respect to the wrist. In addition, the term "foot" as used herein refers to the portion on the distal end side with respect to the ankle.

In this case, in particular, a portion where the surface temperature detected by the human body sensor 170 is equal to or higher than the preset temperature may be specified as a region where at least one of the head, chest and abdomen of the human body is present. Further, when specifying the region where each part of the human body is present, the temperature, position and clothed state of each part may also be specified. The "clothed state" means a state relating to whether the skin of the relevant part is covered with clothing or the like or is exposed.

Where the human body sensor 170 also includes an ultrasonic sensor in addition to the infrared radiation sensor detecting the surface temperature, a human body may be detected and the region where the detected human body is present may be specified based on the detection result of the infrared radiation sensor and the detection result of the ultrasonic sensor. Where a visible image detection sensor is also provided in addition to the infrared radiation sensor, a human body may be detected and the region where the detected human body is present may be specified based on the detection result of the infrared radiation sensor and the detection result of the visible image detection sensor. Alternatively, the region where a human body is present may be specified based on information of only the visible image detection sensor.

The work state determination unit 184 determines the work state of a person on the basis of the biometric information acquired by the biometric information sensor 200 which is the biometric information acquisition means. Specifically, for example, in the case of acquiring brain waves as biometric information, during an information processing work such as studying, office work, and the like, brain waves change with respect to those at the time of resting. Therefore, the work state of a person can be determined by capturing such a change in the brain waves. Further, when breathing is acquired as biometric information, a change such as constant breathing appears when a person concentrates. Therefore, the work state of a person can be determined by capturing such a change in breathing. The same applies to the cases where other types of biometric information, for example, the heart rhythm, balance feature of sympathetic nerves and parasympathetic nerves, viewpoint distance, pupil diameter, and number of blinks are used. In other words, since there is a change in the biometric information between when the person is in the work state and when the person is not in the work state, it is possible to determine the work state of the person by capturing such change in the biometric information. In this way, the biometric information sensor 200 and the work state determination unit 184 constitute work state detection means for detecting the work state of a person.

The work state detection means is not limited to one having the biometric information sensor 200 such as described above. In addition, for example, the work state determination unit 184 may determine the work state of the person according to whether or not the position of the person detected by the person detection means is within a preset specific range. In this case, specifically, for example, a place where a work desk or the like is present is preset as the specific range. Then, when the position of the person detected by the person detection means is within the specific range, the work state determination unit 184 determines that the person is working.

In addition, for example, the work state determination unit 184 may determine the work state of the person on the basis of the posture of the person detected by the person detection means. In this case, specifically, for example, where the air conditioning device 100 is installed in a study or the like, when the posture of the person detected by the person detection means is a seating posture, the work state determination unit 184 determines that the person is working. Further, for example, where the air conditioning device 100 is installed in a kitchen or the like, when the posture of the person detected by the person detection means is an upright posture, the work state determination unit 184 determines that the person is working.

In addition, for example, the user may be able to directly input his/her work state on the remote controller. In this case, specifically, for example, start and end of work can be inputted on the remote controller. Then, after the work start has been inputted on the remote controller, the work state determination unit 184 determines that the user is working until the work end is inputted.

The air blowing control unit 185 is control means for controlling the air blowing mechanism in accordance with the detection result of the human body detection unit 183 and the determination result of the work state determination unit 184. In particular, the air blowing control unit 185 controls the air blowing mechanism to blow air toward the upper part of the person at a first wind speed (arrow A in Fig. 6) when a person is working. At the same time, the air is blown toward the lower part of the person at a second wind speed (arrow B in Fig. 6). The second wind speed is different from the first wind speed.

As described above, the air blowing mechanism of the air conditioning device 100 according to Embodiment 1 is capable of separately adjusting the up-down air blowing direction of the air blown from the left side of the outlet port 112 and the up-down air blowing direction of the air blown from the right side of the outlet port 112. Therefore, it is possible to blow air from the left or right side of the outlet port 112 toward the upper part of the person and blow air from the other side toward the lower part of the person.

Also, at this time, by making a throttle angle of the wind direction plate different between the right side and the left side of the outlet port 112, it is possible to make the speed of the wind toward the upper part of the person different from the speed of the wind toward the lower part of the person. The throttle angle of the wind direction plate on the left side of the outlet port 112 is an angle formed by the left front up-and-down wind direction plate 131 and the left back up-and-down wind direction plate 141. The throttle angle of the wind direction plate on the right side of the outlet port 112 is an angle formed by the right front up-and-down wind direction plate 132 and the right back up-and-down wind direction plate 142.

That is, the air blowing mechanism includes a first set of wind direction plates including the left front up-and-down direction plate 131 and the left back up-and-down wind direction plate 141, and a second set of wind direction plates including the right front up-and-down wind direction plate 132 and the right back up-and-down wind direction plate 142. Further, it can be rephrased that when a person is working, the air blowing control unit 185 sets one of the first set of wind direction plates and the second set of the wind direction plates to a first up-down orientation, and sets the other set to a second up-down orientation different from the first up-down orientation, and also sets the angle formed by the first set of wind direction plates to a first angle and sets the angle formed by the second set of wind direction plates to a second angle different from the first angle.

Specifically, for example, the left front up-and-down direction plate 131 and the left back up-and-down wind direction plate 141 are set to face upward and the angle formed by the left front up-and-down direction plate 131 and the left back up-and-down wind direction plate 141 is set such that the spacing between the left front up-and-down direction plate 131 and the left back up-and-down wind direction plate 141 gradually widens from the air blower fan 122 side toward the outlet port 112 side. At the same time, the right front up-and-down direction plate 132 and the right back up-and-down wind direction plate 142 are set to face downwards and the angle formed by the right front up-and-down direction plate 132 and the right back up-and-down wind direction plate 142 is set such that the spacing between the right front up-and-down direction plate 132 and the right back up-and-down wind direction plate 142 gradually narrows from the air blower fan 122 side toward the outlet port 112 side to throttle the flow.

In this way, the air can be blown from the left side of the outlet port 112 toward the upper part of the person and blown from the right side of the outlet port 112 toward the lower part of the person. At that time, the speed of the wind from the left side of the outlet port 112 is relatively slower than the speed of the wind from the right side of the outlet port 112. In other words, since the wind from the right side of the outlet port 112 is throttled by the right front up-and-down wind direction plate 132 and the right back up-and-down wind direction plate 142, this wind becomes relatively faster than the wind from the left side of the outlet port 112.

That is, as indicated by the arrow A in Fig. 6, a relatively slow wind which is diffused in a wide range is sent to the upper part of the person. Further, as indicated by the arrow B in Fig. 6, a relatively fast which is wind narrowly throttled is sent to the lower part of the person. In the relatively slow wind which is diffused in a wide range, the wind blown out from the inlet port 111 easily mixes with the surrounding air and tends to approach the temperature of the surrounding air before reaching the person. Meanwhile, in the relatively fast wind which is narrowly throttled, the wind blown out from the inlet port 111 hardly mixes with the surrounding air and tends to reach the person while maintaining the temperature at the time of blowing out from the inlet port 111.

For this reason, when the air blowing mechanism performs the heating operation in the above state, for example, the wind sent toward the upper part of the person is mixed with the surrounding air and reaches the vicinity of the head of the person in a state with lowered temperature, and the wind sent toward the lower part of the person reaches the vicinity of the feet of the person while staying warm. Therefore, a temperature distribution in which the lower part is a relatively high temperature and the upper part is a relatively low temperature is formed, so that a so-called cold-head and warm-feet state can be created.

The above description is merely an example, and which of the left and right sides of the outlet port 112 is to be used for blowing the air to the upper part side or lower part side of the person, and which of the left and right throttle angles is to be decreases may be appropriately set by the configuration of the internal air passage of the housing 110, such as the arrangement of the heat exchanger 121 and the like, and the position of the person inside the room or the like. Further, the feature of making different throttle angles is not limited to the set of the up-and-down wind direction plates such as described hereinabove, and may be also applied to the set of left-and-right wind direction plates. Thus, the left-and-right wind direction plate 150 may be divided into a set on the right side and a set on the left side of the outlet port 112, and the throttle angle may be separately adjusted by these left and right sets.

Next, an example of the flow of the air blowing control process of the air conditioning device 100 configured as described above will be described with reference to Fig. 7. When the user operates the input display unit 190 to start the air conditioning operation of the air conditioning device 100, the work state determination unit 184 determines the work state of the person on the basis of the biometric information of the person acquired by the biometric information sensor 200. Then, in the case where the person has started work, the processing advances to step S1.

In step S1, first, temperature distribution data of the temperature detection target range are obtained by the human body sensor 170. Then, from the temperature distribution data acquired by the human body sensor 170, the control device 180 detects at least one of the indoor temperature, the whole body temperature of the person, the temperature of the part of the person, and the temperature in the vicinity of the person. When detecting at least one of the whole body temperature of the person, the temperature of the part of the person, and the temperature in the vicinity of the person, the detection result obtained by the human body detection unit 183 is used as the position and the like of the person. After step S1, the processing advances to step S2.

In step S2, the control device 180 determines the operation mode and the set temperature on the basis of the temperature detected in step S1. This determination is made with reference to the correspondence relationship between the detected temperature and the operation mode and set temperature. The correspondence relationship between the detected temperature and the operation mode and set temperature is stored in advance in, for example, the control device 180.

Fig. 8 shows an example of the correspondence relationship between the detected temperature and the operation mode and set temperature. First, the case where the detected room temperature is 15°C and the detected whole body temperature of the person is 35°C will be described. In this case, since the indoor temperature is as low as 15°C, the season is determined to be winter and the operation mode is determined as heating. It is generally known that the whole body temperature of 33°C to 34°C is neutral in thermal sensation. For this reason, it is presumed that at a whole body temperature of 35°C, the person physically feels hot. It is known that the neutral temperature in winter is 22°C to 23°C. Work efficiency is higher when the thermal sensation of the person is "cold" than when it is "hot". Therefore, the set temperature is determined to be 19°C which is lower than the neutral temperature in winter.

Next, a case where the detected room temperature is 15°C and the detected whole body temperature of the person is 32°C will be described. In this case as well, as in the previous example, because the indoor temperature is as low as 15°C, the season is determined to be winter and the operation mode is determined as heating. Meanwhile, the whole body temperature of 32°C is lower than the temperature at which the thermal sensation becomes neutral. For this reason, it is presumed that the person physically feels cold. Therefore, in such a case, for example, the set temperature of the wind toward the upper part of the person is determined to be 23°C, and the set temperature of the wind toward the lower part of the person is determined to be 26°C. By setting such a temperature, it is possible to form a cold-head and warm-feet temperature distribution while maintaining thermal comfort and to support improvement in human work efficiency.

Subsequently, a case where the detected room temperature is 30°C and the detected whole body temperature of the person is 35°C will be described. In this case, since the indoor temperature is as high as 30°C, the season is determined to be summer and the operation mode is determined as cooling. Further, it is presumed that at a whole body temperature of 35°C, the person physically feels hot. Since work efficiency is higher when the thermal sensation of the person is "cold", the set temperature is determined to be 25°C.

Finally, a case where the detected room temperature is 30°C and the detected whole body temperature of the person is 32°C will be described. In this case, because the indoor temperature is as high as 30°C, the season is determined to be summer, and the operation mode is determined as cooling. Meanwhile, the whole body temperature of 32°C is lower than the temperature at which the thermal sensation becomes neutral. For this reason, it is presumed that the person physically feels cold. Therefore, in such a case, for example, the set temperature of the wind toward the upper part of the person is determined to be 25°C, and the set temperature of the wind toward the lower part of the person is determined to be a higher temperature of 28°C. By setting such a temperature, it is possible to form a cold-head and warm-feet temperature distribution while maintaining thermal comfort and to support improvement in human work efficiency.

Explanation will be continued by referring again to the flowchart of Fig. 7. Based on the correspondence relationship as exemplified above, the control device 180 determines the operation mode and the set temperature from the detected temperature. Then, the control device 180 starts the air conditioning operation at the determined operation mode and the set temperature. During the air conditioning operation, the air blowing control unit 185 controls the air blowing mechanism. In particular, when the set temperature is determined such as to form a cold-head and warm-feet temperature distribution, as described above, the air blowing control unit 185 blows the air toward the upper part of the working person at a first wind speed and, at the same time, blows the air toward the lower part of the person at a second wind speed different from the first wind speed. After step S2, the processing advances to step S3.

In step S3, the work state determination unit 184 determines whether or not the work efficiency of a worker has decreased. In a situation where the work efficiency of the worker is decreasing, for example, a change occurs in the posture of the worker. Specifically, for example, in the case where the body shakes with a constant rhythm due to drowsiness, but the hands do not move, or the like, it is considered that the work efficiency of the worker is decreasing. Further, when the brain waves of the worker are acquired by the biometric information sensor 200, where the sleeping wave is detected in the brain waves, it is considered that the work efficiency of the worker is decreasing. Furthermore, when the biometric information sensor 200 detects the pupil diameter, the number of blinks, and the like, it is also possible to detect a decrease in work efficiency of the worker from these types of biometric information.

When the work efficiency of the worker decreases, the processing returns to step S2. Then, in order to support the work efficiency improvement of the worker, more appropriate operation mode, set temperature, wind direction, wind speed, and the like are determined again, and the air blowing control unit 185 controls the air blowing mechanism according to the changed operation mode. Meanwhile, where the work efficiency of the worker has not decreased in step S3, the processing advances to step S4.

In step S4, the control device 180 determines the thermal comfort, the airflow comfort and the like of the worker on the basis of the detection result of the human body sensor 170, the biometric information acquired by the biometric information sensor 200, and the like. The biometric information used here specifically includes, for example, brain waves, a balance between sympathetic nerves and parasympathetic nerves, and the like.

Where one or more types of comfort such as thermal comfort, air flow comfort, and the like of the worker is below a preset criterion, the processing returns to step S2. Then, in order to improve the comfort, more appropriate operation mode, set temperature, wind direction, wind speed, and the like are determined again, and the air blowing control unit 185 controls the air blowing mechanism according to the changed operation mode. Meanwhile, where the comfort of the worker is not below the preset criterion in step S4, the processing advances to step S5.

In step S5, the work state determination unit 184 determines the work state of the worker on the basis of the biometric information of the worker acquired by the biometric information sensor 200. Then, the work state determination unit 184 confirms whether or not the worker has completed the work. If the worker has not completed the work, the processing returns to step S3.

Meanwhile, where it is detected in step S5 that the worker has completed the work, the processing advances to step S6. In step S6, the control device 180 ends the air conditioning operation performed by the air conditioning device 100.

In step S2, the user may operate the input display unit 190 to set a desired temperature and the like. Further, setting contents for each individual may be stored in the control device 180 so that the setting contents could be called up. Furthermore, it is also possible to specify an individual from the biometric information acquired by the biometric information sensor 200, and automatically call up the setting contents of each individual for use. It is also conceivable to learn the setting contents suitable for each individual and update the setting contents to be stored with the learned contents.

Specifically, for example, the height, physical size, and the like determined from a thermal image captured by the human body sensor 170 or an image captured by a camera or the like can be used for specifying an individual from biometric information. In addition, it is also conceivable to use features such as the total body temperature and the temperature of body parts acquired by the human body sensor 170, and the brain waves, breathing, heart rhythm, balance of sympathetic nerves and parasympathetic nerves, viewpoint distance, pupil diameter, and number of blinks acquired by the biometric information sensor 200.

In the air conditioning device 100, either one or both of the indoor temperature and outdoor temperature may be detected before the operation of blowing the conditioned air. In this case, not only the temperature but also humidity may be detected. When detecting the temperature and the like, the air blower fan 122 is operated so as to take in air to the temperature sensor or the like with a smaller air volume than in the operation of blowing the conditioned air.

It is preferable to determine the operation mode before the operation of blowing the conditioned air, as in the control processing examples explained with reference to the flowchart shown in Fig. 7. After the start of the air conditioning operation, there is a low possibility of changing intentionally to another operation mode, as from the cooling operation to the heating operation or, conversely, from the heating operation to the cooling operation. Meanwhile, since the installation values of temperature and humidity are dependent on the user's thermal sensation, it is desirable that the user determine and change these values each time after the start of the air conditioning operation.

In the air conditioning device configured as described above, when a person is working, the air is blown toward the upper part of the person at the first wind speed, and the air is blown toward the lower part of the person at the second wind speed different from the first wind speed, thereby making it possible to form efficiently a temperature distribution with a temperature difference between the upper part and lower part of the person with a simple configuration and to support improvement in work efficiency of the person while maintaining thermal comfort and airflow comfort of the person.

Also, there are tasks that cannot be determined only from infrared radiation amount of a person, especially in the home. Specifically, for example, when studying at a desk, sitting on a chair and reading, and the like, the amount of infrared radiation of a person does not change because the amount of activity does not change significantly. By providing, as the work state detection means, a combination of the biometric information sensor 200 which is biometric information acquisition means for acquiring biometric information of a person and the work state determination unit 184 for determining the work state of the person on the basis of the biometric information acquired by the biometric information acquisition means it is also possible to detect such a light work which is not accompanied by a change in the amount of infrared radiation of the human body. Therefore, it is possible to support improvement in work efficiency even for a light work which is not accompanied by a change in the amount of infrared radiation of the human body.

Further, by collecting the biometric information with the human body sensor 170 or the biometric information sensor 200, it is also possible to determine, for example, the feeling of coldness of the limbs and individual constitution such as sensitivity to heat, sensitivity to cold, and the like on the basis of radiation amount of the human body surface. In addition, it is possible to realize thermal comfort suitable for individual constitution and support improvement in work efficiency by forming temperature distribution such as cold-head and warm-feet and the like according to the determined individual constitution.

Furthermore, in order to support improvement in working efficiency, the cold state is more advantageous than a hot state in thermal sensation of a person, but in the summer season, for example, the energy consumption of the air conditioning device increases when cooling the entire room. Accordingly, another effect attained by forming a temperature distribution with a temperature difference between the upper part and lower part of a person is that it is possible, for example, to shift the thermal sensation of the person to a cold side without cooling the entire room and to reduce energy consumption.

Hereinabove, a room air conditioner for home use is taken as an example, and an example of a configuration in which the air is blown from the inlet port of one air conditioning device to the upper part and the lower part of a person is described. Meanwhile, for example, as shown in Fig. 9, a plurality of air conditioning devices may be used to blow air at different wind speeds to the upper part and lower part of a person. In the configuration example shown in the figure, the present invention is applied to a package air conditioner. In this example, a plurality of air conditioning devices 100 is installed in one room.

When the start of work by a person is detected, the air is blown from one air conditioning device 100 at a first wind speed toward the upper part of the person, as indicated by the arrow A in Fig. 9. At the same time, from the air conditioning device 100 different from the air conditioning device 100 blowing the air toward the upper part of the person, that is, from a different outlet port, the air is blown toward the lower part of the person at a second wind speed as shown by the arrow B in Fig. 9. The second wind speed is different from the first wind speed. Here, the second wind speed is higher than the first wind speed. With such a configuration, it is also possible to send a relatively slow wind which is diffused in a wide range to the upper part of the person, and at the same time to send a relatively fast wind which is narrowly throttled to the lower part of the person.

In the case of one air conditioning device as shown in Fig. 6 or the like, it is necessary to control the distribution of blown air with a plurality of wind direction plates, whereas by using a plurality of air conditioning devices 100, it is possible to form a cold-head and warm-feet temperature distribution by sending winds with different speeds toward the upper part and lower part of the person with a simpler configuration. Further, even in an environment where there is a plurality of persons, for example, such as an office, the wind speed can be made different between the upper part and the lower part for each of a plurality of persons, and it is possible to form a cold-head and warm-feet temperature distribution for each person. Which outlet ports of which air conditioning devices 100, among the plurality of outlet ports of the plurality of air conditioning devices 100, to use for blowing air to the upper part side or lower part side of the person may be appropriately set depending on the position of the person in the room and the like.

Here, a dry feeling is also a factor influencing the air-conditioning comfort of a user. Accordingly, it is also possible to support the improvement in work efficiency by controlling a humidifying device for humidifying or a dehumidifying device for dehumidifying in cooperation with the air conditioning device 100 according to the present invention. For example, by humidifying, it is possible to suppress the dry feeling in throat, eyes, and the like, and to expect improvement in concentration. The effect obtained by using a humidifying device of a humidification system with heat generation such as a heater system or the like is that the thermal sensation of the user's upper body is shifted to the warm side, especially while suppressing the indoor temperature from becoming excessively high in winter. Meanwhile, in the case of using a humidifying device of a vaporization system, it is possible to give the user a feeling of coldness by heat of vaporization, so that there is an effect of suppressing sleepiness by giving the user a feeling of coldness regardless of the season.

### [Industrial Applicability]

The present invention can be applied to an air conditioning device having an air blowing mechanism capable of generating conditioned air and blowing air. Specific examples include room air conditioners for home use, package air conditioners for business use, housing air conditioners, bathroom dryers, automotive air conditioning devices and the like.

### [Reference Signs List]

- 100: Air conditioning device
- 110: Housing
- 111: Inlet port
- 112: Outlet port
- 113: Front panel
- 121: Heat exchanger
- 122: Air blower fan
- 131: Left front up-and-down wind direction plate
- 132: Right front up-and-down wind direction plate
- 141: Left back up-and-down wind direction plate
- 142: Right back up-and-down wind direction plate
- 150: Left-and-right wind direction plate
- 161: Stepping motor for left up-and-down wind direction plates
- 162: Stepping motor for right up-and-down wind direction plates
- 163: Stepping motor for left-and-right wind direction plate
- 170: Human body sensor
- 171: Metal can
- 172: Sensor stepping motor
- 173: Light distribution viewing angle
- 180: Control device
- 181: Processor
- 182: Memory
- 183: Human body detection unit
- 184: Work state determination unit
- 185: Air blowing control unit
- 190: Input display unit
- 200: Biometric information sensor

## Claims

1. An air conditioning device comprising:
a housing (110) in which an inlet port (111) and an outlet port (112) are formed;
a heat exchanger (121) provided in the housing (110), the heat exchanger (121) generating conditioned air by exchanging heat with air taken in from the inlet port (111);
an air blowing mechanism provided in the housing (110), the air blowing mechanism generating an air flow by taking in air from the inlet port (111) and blowing the conditioned air from the outlet port (112), the air blowing mechanism being capable of changing the direction of conditioned air blown from the outlet port (112);
person detection means (170, 183) configured to detect a person in a preset detection area;
work state detection means configured to detect a work state of the person; and
control means (185) configured to control the air blowing mechanism in accordance with a detection result of the person detection means (170, 183) and a detection result of the work state detection means, wherein
the air blowing mechanism includes a first set of wind direction plates and a second set of wind direction plates,
the air conditioning device being **characterized in that** the control means (185) is configured to, while the person is working, blow air at a first wind speed toward an upper part of the person and blow at a second wind speed different from the first wind speed toward a lower part of the person by setting one of the first set of wind direction plates and the second set of the wind direction plates to a first up-down orientation, and setting the other set to a second up-down orientation different from the first up-down orientation, and also setting a throttle angle formed by the first set of wind direction plates to a first angle and setting a throttle angle formed by the second set of wind direction plates to a second angle different from the first angle..

2. The air conditioning device according to claim 1, wherein
the work state detection means includes:
biometric information acquisition means (200) configured to acquire biometric information of the person; and
a work state determination unit (184) configured to determine a work state of the person on the basis of the biometric information acquired by the biometric information acquisition means.

3. The air conditioning device according to claim 1, wherein the work state detection means includes a work state determination unit (184) configured to determine a work state of the person in accordance with whether or not a position of the person detected by the person detection means (170, 183) is within a preset specific range.

4. The air conditioning device according to claim 1, wherein the work state detection means includes a work state determination unit (184) configured to determine a work state of the person on a basis of a posture of the person detected by the person detection means (170, 183) .

5. The air conditioning device according to any one of claims 1 to 4, wherein the upper part of the person is an upper body including a face of the person.

6. The air conditioning device according to any one of claims 1 to 5, wherein the lower part of the person is a lower body including a foot of the person.

## Patentansprüche

1. Klimaanlage, umfassend:
ein Gehäuse (110), in dem eine Einlassöffnung (111) und eine Auslassöffnung (112) ausgebildet sind;
einen Wärmetauscher (121), der in dem Gehäuse (110) vorgesehen ist, wobei der Wärmetauscher (121) klimatisierte Luft durch Austauschen von Wärme mit der von der Einlassöffnung (111) aufgenommenen Luft erzeugt;
einen Luftblasmechanismus, der in dem Gehäuse (110) vorgesehen ist, wobei der Luftblasmechanismus eine Luftströmung erzeugt durch Aufnehmen von Luft von der Einlassöffnung (111) und Ausblasen der klimatisierten Luft von der Auslassöffnung (112), wobei der Luftblasmechanismus in der Lage ist, die Richtung der von der Auslassöffnung (112) ausgeblasenen klimatisierten Luft zu ändern;
ein Person-Erfassungsmittel (170, 183), das eingerichtet ist, eine Person in einem voreingestellten Erfassungsbereich zu erfassen;
ein Arbeitszustand-Erfassungsmittel, das eingerichtet ist, einen Arbeitszustand der Person zu erfassen; und
ein Steuermittel (185), das eingerichtet ist, den Luftblasmechanismus zu steuern gemäß einem Erfassungsergebnis des Person-Erfassungsmittels (170, 183) und einem Erfassungsergebnis des Arbeitszustand-Erfassungsmittels, wobei
der Luftblasmechanismus eine erste Gruppe von Windleitplatten und eine zweite Gruppe von Windleitplatten umfasst,
wobei die Klimaanlage **dadurch gekennzeichnet ist, dass** das Steuermittel (185) eingerichtet ist, während die Person arbeitet, Luft mit einer ersten Windgeschwindigkeit zu einem oberen Teil der Person zu blasen und mit einer zweiten Windgeschwindigkeit, die sich von der ersten Windgeschwindigkeit unterscheidet, zu einem unteren Teil der Person zu blasen durch Einstellen von einer von der ersten Gruppe von Windleitplatten und der zweiten Gruppe der Windleitplatten auf eine erste Aufwärts-Abwärts-Ausrichtung, und Einstellen der anderen Gruppe auf eine zweite Aufwärts-Abwärts-Ausrichtung, die sich von der ersten Aufwärts-Abwärts-Ausrichtung unterscheidet, und außerdem Einstellen eines Drosselwinkels, der durch die erste Gruppe von Windleitplatten gebildet ist, auf einen ersten Winkel, und Einstellen eines Drosselwinkels, der durch die zweiten Gruppe von Windleitplatten gebildet ist, auf einen zweiten Winkel, der sich von dem ersten Winkel unterscheidet.

2. Klimaanlage nach Anspruch 1, wobei das Arbeitszustand-Erfassungsmittel umfasst:
ein Biometrische-Informationen-Erlangungsmittel (200), das eingerichtet ist, biometrische Informationen der Person zu erlangen; und
eine Arbeitszustand-Bestimmungseinheit (184), die eingerichtet ist, einen Arbeitszustand der Person zu bestimmen auf Grundlage der durch das Biometrische-Informationen-Erlangungsmittel erworbenen biometrischen Informationen.

3. Klimaanlage nach Anspruch 1, wobei das Arbeitszustand-Erfassungsmittel eine Arbeitszustand-Bestimmungseinheit (184) umfasst, die eingerichtet ist, einen Arbeitszustand der Person zu bestimmen in Übereinstimmung damit, ob oder ob nicht eine Position der Person, die durch das Person-Erfassungsmittel (170, 183) erfasst ist, innerhalb eines voreingestellten spezifischen Bereichs liegt.

4. Klimaanlage nach Anspruch 1, wobei das Arbeitszustand-Erfassungsmittel eine Arbeitszustand-Bestimmungseinheit (184) aufweist, die eingerichtet ist, einen Arbeitszustand der Person zu bestimmen auf Grundlage einer Körperhaltung der Person, die durch das Person-Erfassungsmittel (170, 183) erfasst ist.

5. Klimaanlage nach einem der Ansprüche 1 bis 4, wobei der obere Teil der Person ein Oberkörper einschließlich eines Gesichts der Person ist.

6. Klimaanlage nach einem der Ansprüche 1 bis 5, wobei der untere Teil der Person ein Unterkörper einschließlich eines Fußes der Person ist.

## Revendications

1. Dispositif de climatisation comprenant :
un boîtier (110) dans lequel sont formés un orifice d'entrée (111) et un orifice de sortie (112) ;
un échangeur de chaleur (121) disposé dans le boîtier (110), l'échangeur de chaleur (121) générant de l'air climatisé par échange de chaleur avec de l'air aspiré depuis l'orifice d'entrée (111) ;
un mécanisme de soufflerie disposé dans le boîtier (110), le mécanisme de soufflerie générant un flux d'air par aspiration d'air depuis l'orifice d'entrée (111) et soufflant l'air climatisé depuis l'orifice de sortie (112), le mécanisme de soufflerie étant apte à modifier la direction de l'air climatisé soufflé depuis l'orifice de sortie (112) ;
un moyen de détection de personne (170, 183) configuré pour détecter une personne dans une zone de détection prédéfinie ;
un moyen de détection d'état de travail configuré pour détecter un état de travail de la personne ; et
un moyen de commande (185) configuré pour commander le mécanisme de soufflerie en fonction d'un résultat de détection du moyen de détection de personne (170, 183) et d'un résultat de détection du moyen de détection d'état de travail, dans lequel
le mécanisme de soufflerie inclut un premier ensemble de plaques de direction du vent et un second ensemble de plaques de direction du vent,
le dispositif de climatisation étant **caractérisé en ce que** le moyen de commande (185) est configuré pour, pendant que la personne travaille, souffler de l'air à une première vitesse de vent vers une partie supérieure de la personne et souffler à une seconde vitesse de vent différente de la première vitesse de vent vers une partie inférieure de la personne en réglant l'une du premier ensemble de plaques de direction de vent et du second ensemble de plaques de direction de vent sur une première orientation ascendante-descendante, et en réglant l'autre ensemble sur une seconde orientation ascendante-descendante différente de la première orientation ascendante-descendante, et en réglant également un angle d'inclinaison formé par le premier ensemble de plaques de direction de vent sur un premier angle et en réglant un angle d'inclinaison formé par le second ensemble de plaques de direction de vent sur un second angle différent du premier angle.

2. Dispositif de climatisation selon la revendication 1, dans lequel le moyen de détection d'état de travail inclut :
un moyen d'acquisition d'informations biométriques (200) configuré pour acquérir des informations biométriques de la personne ; et
une unité de détermination d'état de travail (184) configurée pour déterminer un état de travail de la personne sur la base des informations biométriques acquises par le moyen d'acquisition d'informations biométriques.

3. Dispositif de climatisation selon la revendication 1, dans lequel le moyen de détection d'état de travail inclut une unité de détermination d'état de travail (184) configurée pour déterminer un état de travail de la personne selon qu'une position de la personne détectée par le moyen de détection de personne (170, 183) se situe ou non dans une plage spécifique prédéfinie.

4. Dispositif de climatisation selon la revendication 1, dans lequel le moyen de détection d'état de travail inclut une unité de détermination d'état de travail (184) configurée pour déterminer un état de travail de la personne sur la base d'une posture de la personne détectée par le moyen de détection de personne (170, 183).

5. Dispositif de climatisation selon l'une quelconque des revendications 1 à 4, dans lequel la partie supérieure de la personne est une partie supérieure de corps incluant un visage de la personne.

6. Dispositif de climatisation selon l'une quelconque des revendications 1 à 5, dans lequel la partie inférieure de la personne est une partie inférieure de corps incluant un pied de la personne.
